# EUROPÄISCHE PATENTSCHRIFT

(11) **EP 2 947 366 B1**
(45) Veröffentlichungstag und Bekanntmachung des Hinweises auf die Patenterteilung: **10.05.2017**
(21) Anmeldenummer: 14168968.7
(22) Anmeldetag: 20.05.2014
(51) Int. Cl.: F16L 41/06, F16L 41/12, F16L 47/30, F16L 47/34

(54) **Klemmrohrschelle**
Clamping bracket for pipes
Collier de serrage pour tuyaux

(43) Veröffentlichungstag der Anmeldung: 25.11.2015
(73) Patentinhaber: Georg Fischer Rohrleitungssysteme AG, 8201 Schaffhausen (CH)
(72) Erfinder: Raible, Moritz, 88662 Überlingen (DE); Breyer, Markus, 78315 Radolfzell (DE); Rösch, Jürgen, 79853 Lenzkirch (DE); Hunnekuhl, Jörg, 79798 Jestetten (DE); Muckenschnabel, Harald, 78224 Singen (DE); Hasific, Edin, 8207 Schaffhausen (CH)
(74) Vertreter: Fenner, Seraina

(56) Entgegenhaltungen:
- WO-A2-2012/102968
- DE-A1-102005 057 662
- GB-A- 1 324 280
- GB-A- 2 018 379
- US-A- 2 239 651

## Beschreibung

Die Erfindung betrifft eine Klemmrohrschelle, die um eine Kunststoffrohrleitung montierbar ist, enthaltend ein Oberteil und ein Unterteil, wobei das Oberteil einen Sattelkörper, Laschen und einen Anschlussstutzen zum Anschliessen der abgehenden Rohrleitungen aufweist, wobei das Unterteil und die Laschen Rastelemente aufweisen, wobei die Rastelemente zum Umschliessen der Rohrleitung miteinander verbindbar sind.

Rohrschellen dieser Art sind aus dem Stand der Technik bekannt. Sie dienen einerseits als Anbohrschellen und werden dazu an Gas-oder Wasserrohrleitungen befestigt, wo mittels einer Anbohrarmatur die Wandung der Gas- oder Wasserleitung durchbohrt wird. Andererseits dienen solche Rohrschellen dem Anschliessen von Abzweigrohren oder weiteren Armaturen an Medium führenden Rohren.

Auch eine Kombination einer Rohrschelle, die als Anbohrarmatur dient und anschliessend als Anschlussmöglichkeit für die abzweigende Leitung eingesetzt werden kann, ist denkbar.

Die DE 10 2005 057 662 B4 offenbart eine Rohrschelle, die um ein Versorgungsrohr feststellbar ist, wobei das über Rastmittel erzielt wird, die sich gegenüberliegende und korrespondierende Profile aufweisen. Die Rohrschelle weist zwei Halbschalen auf, die miteinander gelenkig verbunden sind und mittels den Rastmitteln und der Möglichkeit des Vorspannens über eine Verrasterung stufenweise am Versorgungsrohr befestigt werden können.

Die GB 2 018 379 A offenbart eine Rohrschelle die aus zwei Halbschalen besteht, die durch ein Schliesselement miteinander verbunden werden, wobei das Schliesselemente sich parallel zur Mittelachse verschieben lässt. Nachteilig hierbei ist, dass es nur eine Montageposition der Rohrschelle gibt und kein Nachspannen möglich ist.

Rohrschellen, die als Scharniere ausgebildet sind, wie in der oben erwähnten Offenbarung, haben den Nachteil, dass die Anzugskraft nur einseitig des Rohres aufgebracht wird. Beim variieren des Rohrdurchmessers, bereits schon im zulässigen Toleranzbereich, kann es deshalb zu unterschiedlich starken Verpressungen der Dichtung führen und das wiederum zu Leckagen.

Alternativ dazu sind Rohrschellen bekannt, die beidseitig verschraubt werden. Das heisst, zwei unabhängige Schalen, die auf den gegenüberliegenden Seiten mit Schrauben miteinander verbunden werden.

Auch hier besteht das Problem der unterschiedlich starken Fixierung, wodurch die Dichtheit nicht garantiert ist.

Je mehr Schrauben entlang der Rohrschelle verwendet werden, wie in der EP 2 668 434 A2 offenbart, umso besser ist die Gewährleistung der Dichtheit der Rohrschelle, aber umso mehr Zeit wird zur Montage benötigt.

Es ist Aufgabe der Erfindung, dass die Rohrschelle einfach und zeitsparend montierbar ist sowie dass sie variierende Aussendurchmesser der Rohrleitung im Montagebereich der Klemmrohrschelle auszugleichen vermag, auch solche, die durch Temperaturveränderungen entstanden sind. Zudem soll die Klemmrohrschelle die gleichmässige Verteilung der Montagekräfte gewährleisten, ohne einen erhöhten Montageaufwand zu benötigen.

Diese Aufgabe wird erfindungsgemäss dadurch erzielt, dass die Laschen verschiebbar bzw. verstellbar entlang des Sattelkörperumfangs angeordnet sind.

Das Oberteil bzw. der Sattelkörper mit den Laschen, wobei vorzugsweise mindestens vier Laschen am Sattelkörper angeordnet sind, weist einen Innenradius auf, um das Oberteil auf der Rohrleitung zu montieren. Der Innendurchmesser des Oberteils bzw. des Sattelkörpers und der Laschen der Klemmrohrschelle ist vorzugsweise exzentrisch in Bezug auf die Rohrleitung, an dem die Klemmrohrschelle montiert wird und in Bezug auf das Unterteil, da dieses zentrisch zur Rohrleitung ist, wobei auch ein zentrisches Oberteil anwendbar ist. Beide Ausführungen, ob zentrisch oder exzentrisch gewähren eine gute Fixierung des Oberteils mit dem Unterteil an der Rohrleitung bzw. eine optimale Umfangsspannung, wodurch die Klemmrohrschelle fest an der Rohrleitung befestigt ist.

Die Laschen sind am Sattelkörper angeordnet und verlaufen in Führungen. Die Laschen lassen sich entlang des Sattelkörpers in den dafür vorgesehenen Führungen entlang des Umfangs verstellen bzw. verschieben. Zur Montage wird das Oberteil auf die Rohrleitung bzw. das Unterteil gesetzt an der Position, an der das Unterteil vorab an der Rohrleitung befestigt wurde. Die Laschen befinden sich in ausgefahrenem Zustand beim Anbringen des Oberteils. Dies ermöglicht das einfache Verbinden der Rastelemente des Unterteils mit dem Oberteil bzw. mit den Laschen. Durch die Verbindung mittels Laschen wird eine gleichmässige Spannung auf die Rohrleitung und somit auf die Dichtung erzielt was ein Austreten der Dichtung oder das Risiko einer Leckage verringert. Zudem lassen sich durch die erfindungsgemässe Klemmrohrschelle unterschiedliche Aussendurchmesser der Rohrleitung besser ausgleichen, da die Klemmrohrschelle diese über ihre Länge aufzunehmen vermag und die Laschenpaare entsprechend dem Rohrumfang gespannt werden können.

An den Laschen sind Stellelemente angeordnet, die zur gegenseitigen Verstellung und Fixierung der gegenüberliegenden Laschen dienen.

Durch die Stellelemente, vorzugsweise Schrauben, wird die Klemmrohrschelle mit dem Unterteil verspannt.

Mittels der Stellelemente, welche im Spannbereich der Laschen angeordnet sind, werden die Laschen hochgezogen bzw. gegeneinander in Richtung Zentrum entlang des Aussenumfangs des Sattelkörpers in der Führung gezogen. Dadurch verrasten die Rastelemente des Oberteils bzw. der Laschen mit denen des Unterteils, dies erfolgt vorzugsweise paarweise, so dass die beiden sich am Umfang gegenüberliegenden Laschen zusammen verspannt werden. Durch das Hochziehen bzw. Zusammenspannen der Laschen mittels den Stellelementen beim Befestigen der Klemmrohrschelle, schieben sich die Laschen und somit auch ihr Spannbereich Richtung Zentrum bzw. horizontal über die Rohrleitungsachse bzw. Klemmrohrschellenachse, wodurch sich die Krafteinwirkung der Stellelemente durch die Verkürzung des Hebelarms der Spannbereiche auf die Rastelemente optimiert. Die Laschen verschieben sich vorzugsweise entlang des Aussenumfangs des Sattelkörpers.

Der Sattelkörper weist Führungen auf in denen sich die Laschen verschieben lassen. Die Führungen dienen der optimalen Führung der Laschen, damit diese sich axial nicht verschieben. Vorzugsweise ist die Führung als Nut bzw. Vertiefung entlang des Aussenumfangs des Sattelkörpers ausgebildet, wobei die Breite der Nut bzw. Vertiefung der Breite der Lasche entspricht, welche in der Nut verschiebbar angeordnet ist.

Zur Gewährleistung einer einfachen Montage umschliesst das Unterteil mehr als die Hälfte des Umfangs der Rohrleitung, an der die Klemmrohrschelle befestigt wird, vorzugsweise umschliesst das Unterteil 2/3 der Rohrumfangs. Dadurch wird erreicht, dass das Unterteil vorerst an der Rohrleitung haftet, auch wenn das Oberteil der Klemmrohrschelle noch nicht angebracht wurde, wodurch die Montage vereinfacht wird.

Das Unterteil weist zudem die Form einer zylindrischen Schale auf und erstreckt sich über die komplette Länge der Klemmrohrschelle und in Verbindung mit dem Oberteil umschliesst die Klemmrohrschelle die Rohrleitung komplett. Im Gegensatz zu vielen aus dem Stand der Technik bekannten Rohrschellen wird bei der erfindungsgemässen Klemmrohrschelle das Rohr komplett umschlossen und nicht nur bereichsweise mittels Spannbändern, was den Vorteil mit sich bringt, dass das Rohr bzw. das Material der Wandung sich nicht durch Freiräume wie z.B. Ausschnitte im Unterteil oder durch nicht abgedeckte Bereiche, wo keine Spannbänder den Umfang der Rohrleitung umfassen, hindurch drücken kann. Wenn die Rohrleitung Temperaturschwankungen unterworfen ist, dehnt sich das Material aus und zieht sich bei Abkühlung wieder zusammen, doch mit der Zeit verliert das Material seine Vorspannung, wodurch sich das Material aus solchen Freiräumen nicht mehr zurückziehen kann und es dadurch auch anfällig für Materialversagen ist. Durch die vorliegende Erfindung wird dem Material keine Möglichkeit gegeben, sich in Freiräume auszudehnen, da die erfindungsgemässe Klemmrohrschelle keine solchen Freiräume aufweist, wodurch die Lebensdauer erhöht wird.

Zudem weist das Unterteil sowie der Sattelkörper am Innenumfang eine Struktur auf, die das Verschieben der Klemmrohrschelle verhindert. Vorzugsweises verlaufen die Strukturen am Innenumfang des Unterteils als parallel zueinander angeordnete Stege, die rechtwinklig zur Klemmrohrschellenachse verlaufen und die sich entlang des Innenumfangs erstrecken, wodurch ein axiales Verschieben der Klemmrohrschelle unterbunden wird.

Am Innenumfang des Sattelkörpers verlaufen diese Strukturen in einem Winkel zur Klemmrohrschellenachse, vorzugsweise in einem Winkel von ca. 45°, wodurch ebenfalls eine axiale Verschiebung unterbunden wird wie auch ein Verdrehen der Klemmrohrschelle auf der Rohrleitung verhindert wird.

Die Klemmrohrschelle weist Unterlagsscheiben auf, wobei diese an den Laschen angeordnet sind. Die Unterlagsscheiben sind im Spannbereich der Laschen angeordnet und weisen einen Innenradius auf. Entsprechend weisen die Laschen im Spannbereich einen korrespondierenden Aussenradius auf, an dem die Unterlagsscheiben verschiebbar angeordnet sind.

Durch diese Anordnung wird ermöglicht, dass während des Spannvorgangs der Laschen bzw. des Zusammenziehens der Laschen durch die Stellelemente, die Unterlagsscheiben am Aussenradius das Spannbereichs mitgeschoben werden und dadurch ein Verkanten der Stellelemente vermieden werden kann, da die Stellelemente durch die Unterlagsscheiben in horizontaler Lage gehalten werden und eine optimaler Spannungvorgang gewährt werden kann.

Die Rastelemente der Klemmrohrschelle werden vorzugsweise durch Rastnasen am Unterteil und Nuten in den Laschen gebildet, die korrespondieren. Selbstverständlich sind auch andere Rastelemente denkbar.

Die Rastelemente sind im Bereich der Klemmenden der Laschen angeordnet, wobei der Sattelkörper Stützelemente aufweist, welche die Klemmenden der Laschen im fertig montierten Zustand der Klemmrohrschelle stützen. Durch die Stützelemente, die über die Führungen ragen und dadurch die Laschen entlang des Aussenumfangs des Sattelkörpers führen, haben die Laschen keine Möglichkeit, die Rastnasen des Unterteils zu überspringen, da sie auch in dieser Richtung zwangsgeführt sind.

Als weitere Ausgestaltung weisen die Laschen an ihrem Aussenumfang Umfangsrippen auf, die als weiteres Führungselement dienen. Im Stützelement sind die entsprechenden Nuten angeordnet, die der Führung der Umfangsrippen dienen.

Als weiteres Führungselement dient ein T-Nutenstein, der am Innenumfang der Laschen angeordnet ist. Der T-Nutenstein verläuft in einer korrespondierenden Führungsnut, vorzugsweise einer T-Nut, welche im Sattelkörper vorzugsweise in der Führung der Lasche angeordnet ist. Durch diese weitere Führung wird wiederum ein Abheben der Laschen vom Aussenumfang des Sattelkörpers unterbunden. Selbstverständlich sind auch andere Führungen denkbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässen Klemmrohrschelle in geschlossenem bzw. gespanntem Zustand,
- Fig. 2: eine Explosionsdarstellung einer erfindungsgemässen Klemmschelle,
- Fig. 3: eine Frontansicht einer erfindungsgemässen Klemmrohrschelle in geöffnetem bzw. noch nicht gespanntem Zustand,
- Fig. 4: eine Frontansicht einer erfindungsgemässen Klemmrohrschelle in geschlossenem bzw. gespanntem Zustand und
- Fig. 5: eine weitere Explosionsdarstellung einer erfindungsgemässen Klemmschelle.

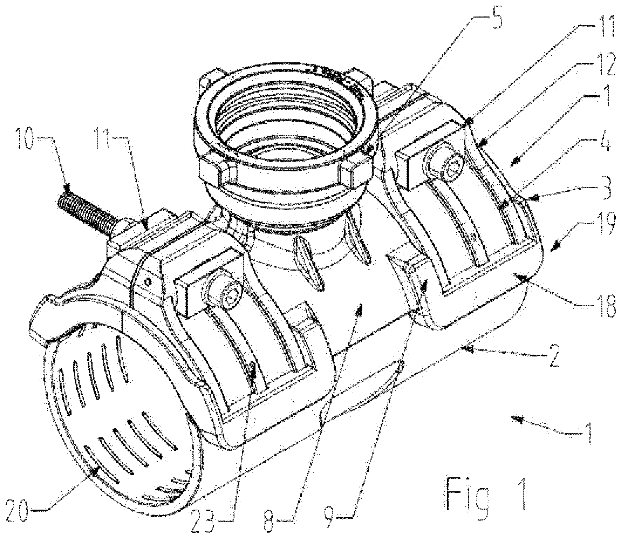

In Fig. 1 ist die erfindungsgemässe Klemmrohrschelle 1 in gespanntem Zustand bzw. in montiertem Zustand gezeigt. Die Rohrleitung, an die eine solche Klemmrohrschelle 1 montiert wird, ist nicht abgebildet. Die Klemmrohrschelle 1 weist ein Unterteil 2 auf, das einer zylindrischen Schale entspricht, die mehr als den halben Umfang der Rohrleitung umschliesst, vorzugsweise 2/3 des Umfangs. Dadurch wird die Montage vereinfacht, da das Unterteil 2 vorerst an der Rohrleitung haftet, ohne dass es vom Monteur gehalten werden muss, bis die Installation abgeschlossen ist.

Am Innenumfang des Unterteils 2 befindet sich eine Struktur 20, die vermeidet, dass die Klemmrohrschelle 1 sich verschiebt. Vorzugsweise wird die Struktur 20 am Innenumfang des Unterteils 2 durch Stege gebildet, die entlang des Umfangs verlaufen, um eine axiale Verschiebung der Klemmrohrschelle 1 zu unterbinden. Das Oberteil 3 der Klemmrohrschelle 1 weist einen Sattelkörper 8 auf, an dem ein Anschlussstutzen 5 angeordnet ist. Dieser ist variabel einsetzbar, das heisst, er kann als Anbohrarmatur ausgebildet sein sowie als blosser Anschlussstutzen oder auch eine Kombination ist denkbar. Die erfindungsgemässe Klemmrohrschelle 1 ist für jegliche Anwendungen einsetzbar. Zudem sind am Oberteil 3 Laschen 4 angeordnet, die das Verbinden des Unterteils 2 und Oberteils 3 ermöglichen. Die Laschen 4 sind in den Führungen 9 am Sattelkörper 8 angeordnet, wobei die Führungen 9 als Nut bzw. Vertiefung am Aussenumfang des Sattelkörpers 8 verlaufen. Die Breite der Laschen 4 entspricht somit der Nutbreite der Führungen 9, wodurch die Laschen 4 axial geführt sind. Vorteilhaft ist es, wenn den Laschen 4, durch Stützelemente 18 an den Führungen 9, das Abheben verunmöglicht wird. Somit wird vermieden, dass die Rastelemente 19 nicht ineinander greifen, indem die Klemmenden 17 der Laschen 4 keine Möglichkeit haben auszuweichen und zwangsgeführt sind.

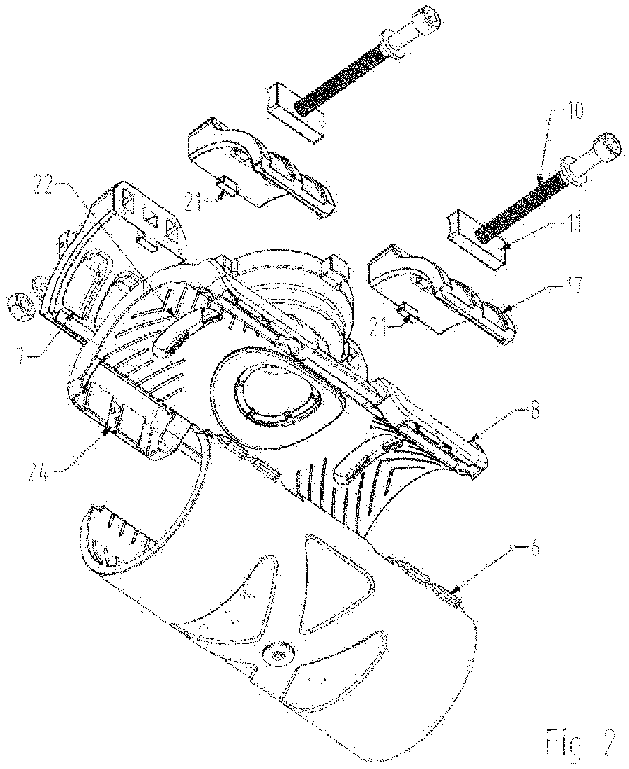

Weitere Elemente, die die Positionierung und Führung der Laschen 4 unterstützen, sind Führungselemente, die vorzugsweises als T-Nutensteine 21 ausgebildet und am Innenumfang der Laschen 4 angeordnet sind, was aus Fig. 2 ersichtlich ist. Die T-Nutensteine 21 laufen in den entsprechenden Führungsnut 22, vorzugsweise einer T-Nut am Sattelkörper 8. Zudem weisen die Laschen 4 an ihrem Aussenumfang noch Umfangsrippen 23 auf, welche in Fig. 1 ersichtlich sind, die mit den Nuten 24 im Stützelement 18 korrespondieren und dadurch die Führung der Laschen 4 verbessern und stabilisieren.

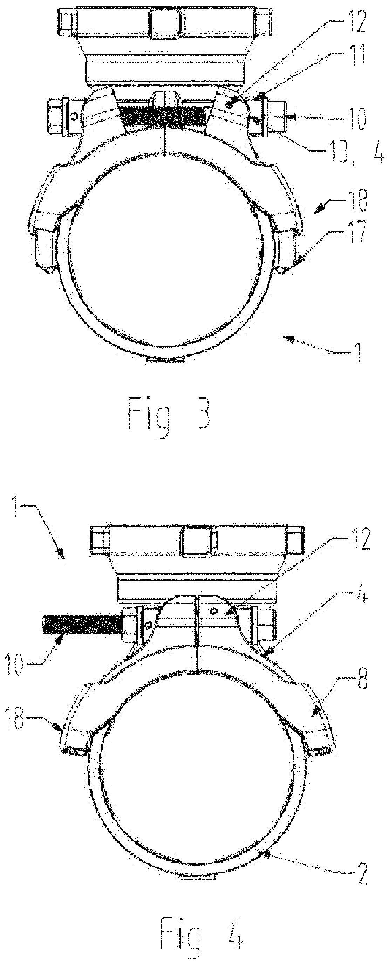

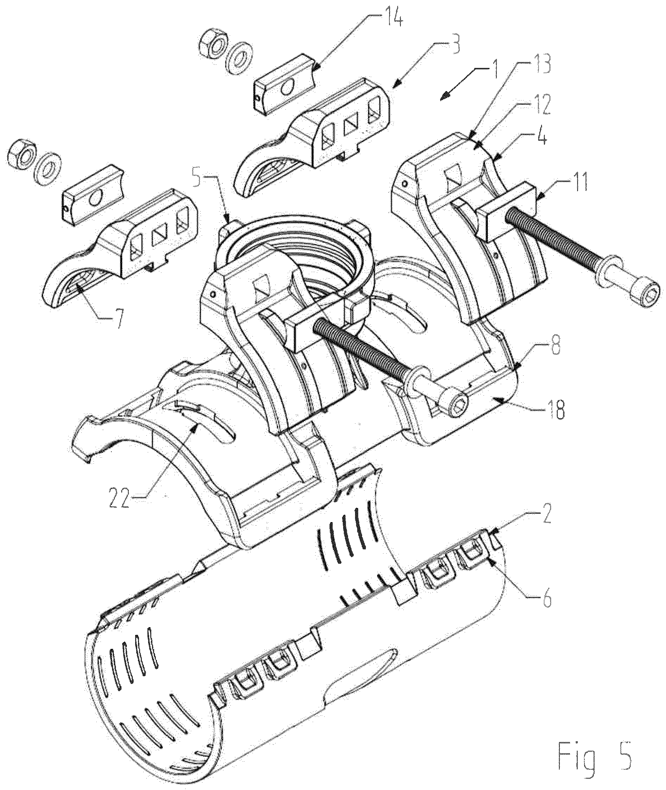

Im Spannbereich 12 der Laschen 4 sind Stellelemente 10 angeordnet, welche vorzugsweises als Schrauben ausgebildet sind. Zur optimalen Verspannung der Laschen 4 mittels den Stellelementen 10 sind Unterlagsscheiben 11 an den Laschen 4 im Spannbereich 12 angeordnet. Diese Unterlagsscheiben 11 weisen einen Innenradius 14 auf, welcher in Fig. 5 erkennbar ist, der mit dem Aussenradius 13 an den Laschen 4 im Spannbereich 12 korrespondieret und so ein Anziehen und Lösen der Laschen 4 ohne Verkanten der Stellelement 10 mit dem Spannbereich 12 der Laschen 4 verursacht. Aus den Fig. 3 und 4 ist der Spannvorgang der Klemmrohrschelle 1 gut erkennbar. Fig. 3 zeigt die Klemmrohrschelle 1 in noch nicht gespannter bzw. fertig montierter Position. Durch die Unterlagsscheiben 11 mit entsprechendem Innenradius 14 und dem Spannbereich 12 der Lasche 4 mit korrespondierendem Aussenradius 13 gleiten die Unterlagsscheiben 11 am Aussenradius 13 während des Spannvorgangs entlang und ermöglichen dem Stellelement 10 ein Spannen der Laschen 4, ohne dass sie sich verkanten. Zudem ist aus den Fig. 3 und 4 gut ersichtlich, wie sich die Laschen 4 entlang des Aussenradius des Sattelkörpers 8 verschieben und dass die Klemmenden 17 der Laschen 4 in gespannter bzw. fertig montierter Position, wie in Fig. 4 gezeigt, unter den Stützelementen 18 befinden und dadurch gestützt werden und die Rastelemente 19 bzw. die Nuten 7 in den Laschen die Rastnasen 6 am Unterteil 2 nicht überspringen können.

In Fig. 2 sind die Nuten 7 am Innenumfang in den Laschen 4 ersichtlich, die dazu dienen, die Laschen in den Rastnasen 6 am Unterteil einzuhängen und dann zusammenzuspannen.

Zudem ist aus Fig. 2 gut ersichtlich, dass sich auch eine Struktur 20 am Innenumfang des Sattelkörpers 8 befindet, wobei diese Stege vorzugsweise 45° zur Klemmrohrschelle angeordnet sind und so das Verdrehen auf der Rohrleitung unterbunden wird.

### Bezugszeichenliste

- 1: Klemmrohrschelle
- 2: Unterteil
- 3: Oberteil
- 4: Laschen
- 5: Anschlussstutzen
- 6: Rastnase
- 7: Nute
- 8: Sattelkörper
- 9: Führung
- 10: Stellelement
- 11: Unterlagsscheibe
- 12: Spannbereich
- 13: Aussenradius Spannbereich
- 14: Innenradius Unterlagsscheibe
- 15 16 17: Klemmende Lasche
- 18: Stützelement
- 19: Rastelement
- 20: Struktur
- 21: Führungselement, T-Nutenstein
- 22: Führungsnut, T-Nut
- 23: Umfangsrippe
- 24: Nut in Stützelement

## Patentansprüche

1. Klemmrohrschelle (1), die um eine Kunststoffrohrleitung montierbar ist, enthaltend ein Oberteil (3) und ein Unterteil (2), wobei das Oberteil (3) einen Sattelkörper (8), Laschen (4) und einen Anschlussstutzen (5) zum Anschliessen der abgehenden Rohrleitungen aufweist, wobei das Unterteil (2) und die Laschen (4) Rastelemente (19) aufweisen, wobei die Rastelemente (19) zum Umschliessen der Rohrleitung miteinander verbindbar sind, **dadurch gekennzeichnet, dass** die Laschen (4) verschiebbar bzw. verstellbar entlang des Sattelkörperumfangs angeordnet sind.

2. Klemmrohrschelle (1) nach Anspruch 1, **dadurch gekennzeichnet, dass** die Rastelemente (19) durch Rastnasen (6) und Nuten (7) gebildet sind, vorzugsweise sind die Rastnasen (6) am Unterteil (2) und die Nuten (7) in den Laschen (4) angeordnet.

3. Klemmrohrschelle (1) nach Anspruch 1 oder 2, **dadurch gekennzeichnet, dass** das Oberteil (3) mindestens vier Laschen (4) aufweist.

4. Klemmrohrschelle (1) nach einem der Ansprüche 1 bis 3, **dadurch gekennzeichnet, dass** der Sattelkörper (8) Führungen (9) entlang des Aussenumfangs des Sattelkörpers (8) zur Führung der Laschen (4) aufweist.

5. Klemmrohrschelle (1) nach einem der Ansprüche 1 bis 4, **dadurch gekennzeichnet, dass** an den Laschen (4) Stellelemente (10) vorzugsweise Schrauben angeordnet sind, wobei die Stellelemente (10) zur Verstellung und Fixierung der Laschen (4) dienen.

6. Klemmrohrschelle (1) nach einem der Ansprüche 1 bis 5, **dadurch gekennzeichnet, dass** das Unterteil (2) mehr als die Hälfte des Rohrumfangs umschliesst, um das die Klemmrohrschelle befestigt wird, vorzugsweise umschliesst das Unterteil (2) 2/3 des Rohrumfangs.

7. Klemmrohrschelle (1) nach einem der Ansprüche 1 bis 6, **dadurch gekennzeichnet, dass** sich das Unterteil (2) über die komplette Länge der Klemmrohrschelle (1) erstreckt und in Verbindung mit dem Oberteil (3) die Rohrleitung komplett umschliesst.

8. Klemmrohrschelle (1) nach einem der Ansprüche 1 bis 7, **dadurch gekennzeichnet, dass** an den Laschen (4) Unterlagsscheiben (11) angeordnet sind.

9. Klemmrohrschelle (1) nach Anspruch 8, **dadurch gekennzeichnet, dass** an den Unterlagsscheiben (11) ein Innenradius (14) angeordnet ist.

10. Klemmrohrschelle (1) nach Anspruch 8 oder 9, **dadurch gekennzeichnet, dass** die Laschen (4) einen Spannbereich (12) aufweisen, wobei der Spannbereich (12) einen Aussenradius (13) aufweist, an dem die Unterlagsscheibe (11) mittels korrespondierendem Innenradius (14) angeordnet ist.

11. Klemmrohrschelle (1) nach einem der Ansprüche 1 bis 10, **dadurch gekennzeichnet, dass** die Laschen (4) Klemmenden (17) und der Sattelkörper (8) Stützelemente (18) aufweist, wobei die Stützelemente (18) vorzugsweise die Klemmenden (17) der Laschen (4) in fertig montiertem Zustand der Klemmrohrschelle (1) stützen.

12. Klemmrohrschelle (1) nach einem der Ansprüche 1 bis 11, **dadurch gekennzeichnet, dass** die Laschen (4) am Aussenumfang Umfangsrippen (23) zur Führung aufweisen, die vorzugsweise mittels den Nuten (24) in den Stützelementen (18) geführt werden.

13. Klemmrohrschelle (1) nach einem der Ansprüche 1 bis 12, **dadurch gekennzeichnet, dass** die Laschen (4) am Innenumfang ein Führungselement (21) aufweist, vorzugsweise ein T-Nutenstein und das Führungselement (21) in einer korrespondierenden Führungsnut (22) im Sattelkörper (8) angeordnet ist.

## Claims

1. Clamping-action pipe bracket (1) which can be fitted around a plastic pipeline and contains an upper part (3) and a lower part (2), wherein the upper part (3) has a saddle body (8), link plates (4) and a connector (5) for connecting the outgoing pipelines, wherein the lower part (2) and the link plates (4) have latching elements (19), wherein the latching elements (19) can be connected to one another in order to enclose the pipeline, **characterized in that** the link plates (4) are arranged such that they can be displaced and/or adjusted along the circumference of the saddle body.

2. Clamping-action pipe bracket (1) according to Claim 1, **characterized in that** the latching elements (19) are formed by latching noses (6) and grooves (7), and preferably the latching noses (6) are arranged on the lower part (2) and the grooves (7) are arranged in the link plates (4).

3. Clamping-action pipe bracket (1) according to Claim 1 or 2, **characterized in that** the upper part (3) has at least four link plates (4).

4. Clamping-action pipe bracket (1) according to one of Claims 1 to 3, **characterized in that** the saddle body (8) has guides (9) along the outer circumference of the saddle body (8), for the purpose of guiding the link plates (4).

5. Clamping-action pipe bracket (1) according to one of Claims 1 to 4, **characterized in that** adjusting elements (10), preferably screws, are arranged on the link plates (4), wherein the adjusting elements (10) serve for adjusting and fixing the link plates (4).

6. Clamping-action pipe bracket (1) according to one of Claims 1 to 5, **characterized in that** the lower part (2) encloses more than half the pipe circumference around which the clamping-action pipe bracket is fastened, the lower part (2) preferably enclosing 2/3 of the pipe circumference.

7. Clamping-action pipe bracket (1) according to one of Claims 1 to 6, **characterized in that** the lower part (2) extends over the entire length of the clamping-action pipe bracket (1) and, in conjunction with the upper part (3), encloses the pipeline completely.

8. Clamping-action pipe bracket (1) according to one of Claims 1 to 7, **characterized in that** washers (11) are arranged on the link plates (4).

9. Clamping-action pipe bracket (1) according to Claim 8, **characterized in that** an inner radius (14) is arranged on the washers (11).

10. Clamping-action pipe bracket (1) according to Claim 8 or 9, **characterized in that** the link plates (4) have a stressing region (12), wherein the stressing region (12) has an outer radius (13), on which the washer (11) is arranged by means of the corresponding inner radius (14).

11. Clamping-action pipe bracket (1) according to one of Claims 1 to 10, **characterized in that** the link plates (4) has clamping ends (17) and the saddle body (8) has supporting elements (18), wherein the supporting elements (18) preferably support the clamping ends (17) of the link plates (4) when the clamping-action pipe bracket (1) has been definitively fitted.

12. Clamping-action pipe bracket (1) according to one of Claims 1 to 11, **characterized in that** the link plates (4), on the outer circumference, have circumferential ribs (23) for guidance purposes, said ribs being guided preferably by means of the grooves (24) in the supporting elements (18).

13. Clamping-action pipe bracket (1) according to one of Claims 1 to 12, **characterized in that** the link plates (4), on the inner circumference, has a guide element (21), preferably a T-shaped sliding block, and the guide element (21) is arranged in a corresponding guide groove (22) in the saddle body (8).

## Revendications

1. Collier de serrage pour tuyau (1) qui peut être monté autour d'une conduite tubulaire en plastique, comprenant une partie supérieure (3) et une partie inférieure (2), la partie supérieure (3) présentant un corps d'étrier (8), des pattes (4) et une tubulure de raccordement (5) pour le raccordement des conduites tubulaires partantes, la partie inférieure (2) et les pattes (4) présentant des éléments d'encliquetage (19), les éléments d'encliquetage (19) pouvant être connectés les uns aux autres pour entourer la conduite tubulaire, **caractérisé en ce que** les pattes (4) sont disposées de manière déplaçable ou réglable le long de la périphérie du corps d'étrier.

2. Collier de serrage pour tuyau (1) selon la revendication 1, **caractérisé en ce que** les éléments d'encliquetage (19) sont formés par des ergots d'encliquetage (6) et des rainures (7), de préférence les ergots d'encliquetage (6) sont disposés au niveau de la partie inférieure (2) et les rainures (7) sont disposées dans les pattes (4) .

3. Collier de serrage pour tuyau (1) selon la revendication 1 ou 2, **caractérisé en ce que** la partie supérieure (3) présente au moins quatre pattes (4).

4. Collier de serrage pour tuyau (1) selon l'une quelconque des revendications 1 à 3, **caractérisé en ce que** le corps d'étrier (8) présente des guides (9) le long de la périphérie extérieure du corps d'étrier (8) pour le guidage des pattes (4).

5. Collier de serrage pour tuyau (1) selon l'une quelconque des revendications 1 à 4, **caractérisé en ce que** des éléments de réglage (10), de préférence des vis, sont disposés sur les pattes (4), les éléments de réglage (10) servant à régler et fixer les pattes (4).

6. Collier de serrage pour tuyau (1) selon l'une quelconque des revendications 1 à 5, **caractérisé en ce que** la partie inférieure (2) entoure plus de la moitié de la périphérie du tuyau, autour duquel est fixé le collier de serrage pour tuyau, de préférence entoure la partie inférieure (2) sur deux tiers de la périphérie du tuyau.

7. Collier de serrage pour tuyau (1) selon l'une quelconque des revendications 1 à 6, **caractérisé en ce que** la partie inférieure (2) s'étend sur toute la longueur du collier de serrage pour tuyau (1) et conjointement avec la partie supérieure (3), entoure complètement la conduite tubulaire.

8. Collier de serrage pour tuyau (1) selon l'une quelconque des revendications 1 à 7, **caractérisé en ce que** des rondelles (11) sont disposées au niveau des pattes (4).

9. Collier de serrage pour tuyau (1) selon la revendication 8, **caractérisé en ce qu'**une courbure intérieure (14) est disposée au niveau des rondelles (11).

10. Collier de serrage pour tuyau (1) selon la revendication 8 ou 9, **caractérisé en ce que** les pattes (4) présentent une région de serrage (12), la région de serrage (12) présentant une courbure extérieure (13) au niveau de laquelle la rondelle (11) est disposée au moyen de la courbure intérieure correspondante (14).

11. Collier de serrage pour tuyau (1) selon l'une quelconque des revendications 1 à 10, **caractérisé en ce que** les pattes (4) présente des extrémités de serrage (17) et le corps d'étrier (8) présente des éléments de support (18), les éléments de support (18) supportant de préférence les extrémités de serrage (17) des pattes (4) dans l'état monté fini du collier de serrage pour tuyau (1) .

12. Collier de serrage pour tuyau (1) selon l'une quelconque des revendications 1 à 11, **caractérisé en ce que** les pattes (4) présentent au niveau de la périphérie extérieure des nervures périphériques (23) pour le guidage, qui sont de préférence guidées au moyen des rainures (24) dans les éléments de support (18).

13. Collier de serrage pour tuyau (1) selon l'une quelconque des revendications 1 à 12, **caractérisé en ce que** les pattes (4) présente au niveau de la périphérie intérieure un élément de guidage (21), de préférence un coulisseau en T et l'élément de guidage (21) est disposé dans une rainure de guidage correspondante (22) dans le corps d'étrier (8) .
